# EUROPEAN PATENT SPECIFICATION

(11) **EP 4 152 447 B1**
(45) Date of publication and mention of the grant of the patent: **26.06.2024**
(21) Application number: 22184943.3
(22) Date of filing: 14.07.2022
(51) Int. Cl.: H01M 8/0228, H01M 8/04082, H01M 8/12

(54) **METAL COMPONENT FOR ELECTROCHEMICAL STACK AND ELECTROCHEMICAL STACK**
METALLKOMPONENTE FÜR ELEKTROCHEMISCHEN STAPEL UND ELEKTROCHEMISCHER STAPEL
COMPOSANT MÉTALLIQUE POUR PILE ÉLECTROCHIMIQUE ET PILE ÉLECTROCHIMIQUE

(30) Priority: 13.08.2021 JP 2021132001
(43) Date of publication of application: 22.03.2023
(73) Proprietor: Toshiba Energy Systems & Solutions Corporation, Saiwai-ku Kawasaki-shi Kanagawa (JP)
(72) Inventor: Inuzuka, Riko, Kawasaki-shi, Kanagawa (JP); Kameda, Tsuneji, Kawasaki-shi, Kanagawa (JP); Asayama, Masahiro, Kawasaki-shi, Kanagawa (JP); Osada, Norikazu, Kawasaki-shi, Kanagawa (JP); Kobayashi, Shohei, Kawasaki-shi, Kanagawa (JP)
(74) Representative: Hoffmann Eitle

(56) References cited:
- WO-A1-2021/096828
- CN-A- 106 992 309
- DE-A1-102014 109 321
- DE-A1-102016 218 688
- US-A1- 2004 106 029
- US-A1- 2016 233 524
- US-A1- 2018 340 445
- US-B1- 7 150 931

## Description

### FIELD

Embodiments disclosed herein relate to a metal component for electrochemical stack and an electrochemical stack.

### BACKGROUND

One of new energy resources is hydrogen. As a utilization field of hydrogen, fuel cells attract attention which cause hydrogen and oxygen to electrically react with each other to thereby convert chemical energy into electric energy. The fuel cells have high energy utilization efficiency and are being developed as a large-scale distributed power supply, a domestic power supply, and a mobile power supply. Of the fuel cells, a solid oxide fuel cell (SOFC) which obtains electric energy by an electrochemical reaction using an electrolyte composed of a solid oxide attracts attention from the viewpoint of efficiency and so on. In the manufacture of hydrogen, electrolysis reactions of water are known. A solid oxide electrolysis cell (SOEC) employing a high-temperature water vapor electrolysis method of electrolyzing water vapor at high temperature of the electrolysis reactions of water is being researched. The operation principle of the SOEC is an inverse reaction of the SOFC, and an electrolyte composed of a solid oxide is used as in the SOFC.

The electrochemical cell used in the SOFC or the SOEC has at least a stacked body of an air electrode (oxygen electrode), an electrolyte layer, and a fuel electrode (hydrogen electrode), for which materials having different characteristics are used. The air electrode and the fuel electrode are porous, and different gasses are supplied to the air electrode and the fuel electrode with a dense electrolyte as a boundary. The air electrode and the fuel electrode are electric conductors, and the electrolyte is an ion conductor which does not conduct electricity. Examples of the shape of the electrochemical cell include a flat plate type, a cylinder type, a cylinder-plate type and so on. The flat plate type electrochemical cell has a shape in which the air electrode, the electrolyte, and the fuel electrode are stacked in a plate shape. What is obtained by integrating a plurality of the cells is generally called a stack. In the case of the flat plate type electrochemical cell, the stack is made by stacking a plurality of flat plate type cells, and has a structure in which different gasses are supplied to the air electrode and the fuel electrode of each cell and cells are can be electrically connected in series. The cells are separated by a separator, and the separator partitions gasses for the cells. The separator is conductive and thus also has a role of electrically conducting the cells. A supply flow path and an exhaust flow path for the gasses to each cell are also generally formed in the separator.

A metal component used for the SOFC or the SOEC is required to have sufficient strength and oxidation resistance at a high temperature of 600 to 1000°C being a working temperature and have a thermal expansion coefficient close to that of the cell, and so on. As the material satisfying the above characteristics, ferritic stainless steel is often used. The metal component used for the SOFC or the SOEC is used at high temperature in a specific environment where one side is in contact with air and the other side is in contact with a mixed gas of hydrogen and water vapor. In the separator of the above stack, a surface on the air electrode side is in contact with air and a surface on the hydrogen electrode is in contact with an atmosphere containing hydrogen such as a mixed gas of hydrogen and water vapor. Further, a pipe for the mixed gas of hydrogen and water vapor has an inner surface in contact with the mixed gas of hydrogen and water vapor and an outer surface in contact with air.

It has been revealed by the research of the inventors of this application that metallic corrosion of the above-explained metal is accelerated in a specific environment where one side is in contact with air and the other side is in contact with an atmosphere containing hydrogen at high temperature. Further, the electric resistance of the separator required to conduct electricity among the metal components is directly linked to the efficiency of the SOFC or the SOEC, and therefore an increase in resistance due to the corrosion is also a serious problem. To prevent the performance degradation of the cell due to the evaporation of chromium from the separator made of stainless steel and the adhesion of chromium to the cell, a chromium diffusion inhibition coating is often provided on the air electrode side of the separator. The chromium diffusion inhibition coating is applied to the air electrode side of the separator, and it has been revealed by the research of the inventors of this application that the coating also deteriorates from the influence of diffusion of hydrogen present on the rear side.

WO 2021 /096828 A1 describes components of a solid oxide fuel cell device such as interconnect plates, seals, and/or endplates that may be composed of materials including aluminum, copper, and/or graphite. The components may be coated with materials such as, for example, graphite, copper, aluminum, carbide ceramics, nitride ceramics, conversion coatings, or aluminum intermetallics.

US2004/106029A1 A describes a corrosion resistant coated fuel cell plate and method of making the same. A metal plate is provided with a multilayered conductive coating and then with an overcoat which fills in fine scale porosities in the coating. In one preferred embodiment, the overcoating is amorphous graphite applied through a deposition process. In another preferred embodiment, the overcoating is a thin layer of oxide created by chemical anodization process.

US 7 150 931 B1 A describes a fuel cell gas separator member that comprises a layer of copper or copper-based alloy having a layer of oxidation-resistant material such as A12O3 on the cathode side. A protective layer may also be provided on the anode-side of the copper or copper-based alloy layer. The copper-based alloy may be aluminium bronze. Alternatively, the copper or copper-based alloy layer may be wrapped in a foil of heat resistant steel.

DE 10 2014 109321 A1 describes a method for producing a bipolar plate, in particular for producing a bipolar plate for an electrochemical cell, said method comprising: - providing a substrate with a substrate surface, and - applying a coating to at least a portion of the substrate surface, in which method a rough and/or porous cover layer of the coating is applied to at least a portion of the substrate surface with a rough and/or porous cover layer surface which faces away from the substrate using a plasma spraying method. It is proposed that a protective layer of the coating is applied to the cover layer surface.

US 2016/233524 A1 describes an interconnect for a low temperature solid oxide fuel cell, the interconnect comprising: a stainless steel substrate comprising a first surface and a second surface; a layer comprising chromium oxide on the first surface of the substrate, wherein the chromium oxide layer has a thickness in the range of 350-600 nm; and a metal oxide coating on the chromium oxide layer. A process for making an interconnect for a low temperature solid oxide fuel cell, the process comprising: coating a first surface of a stainless steel substrate with a metal oxide to form a coated substrate; and heating the coated substrate to a temperature in the range of 800-900° C. to form a layer comprising chromium oxide between the first surface and the metal oxide coating.

CN 106 992 309 A describes a hydrogen supply system of a fuel cell stack power generation system. The hydrogen supply system consists of a fuel cell stack, a hydrogen conveying pipe and a hydrogen discharge pipe, the hydrogen conveying pipe is equipped with a pressure-reducing valve for reducing hydrogen pressure, an electromagnetic valve for controlling hydrogen conveying, an electric control valve for regulating hydrogen flow and a flowmeter along the hydrogen flow direction successively, the hydrogen discharge pipe is equipped with a gas-water separator for separating hydrogen and water, an output end of the gas-water separator includes a first output end for separating hydrogen and a second output end for separating water, the first output end is communicated with a hydrogen circulation pipe, the hydrogen circulation pipe is communicated with the hydrogen conveying pipe through a tee j oint, the hydrogen circulation pipe is equipped with a circulation pump, the second output end is communicated with a drainage pipe, and the drainage pipe is provided with a drainage electromagnetic valve. The hydrogen supply system also includes a controller and a pressure sensor.

DE 10 2016 218688 A1 relates to a method of manufacturing a hydrogen-carrying steel component for use in motor vehicles. The method comprises the steps of: i) producing a base body from steel having a nickel content of less than 13.0 mass percent based on the total weight of the base body, ii) coating the base body with a copper layer, and iii) carrying out a heat treatment involving alloying copper from the copper layer into the base body and alloying at least one steel component from the base body into the copper layer.

US 2018/340445 A1 describes a gas turbine engine component that includes a metal substrate and a coating system disposed on the metal substrate. The coating system includes at least one layer of aluminum-chromium oxide.

### SUMMARY

A subject to be solved by the aspects of the invention is to a metal component for electrochemical stack which makes it possible to suppress the metallic corrosion in the specific environment where one side is in contact with air and the other side is in contact with an atmosphere containing hydrogen.

According to the aspects of the present invention, there is provided a metal component for electrochemical stack which makes it possible to suppress the metallic corrosion in the specific environment where one side is in contact with air and the other side is in contact with an atmosphere containing hydrogen.

### BRIEF DESCRIPTION OF THE DRAWINGS

FIG. 1 is a sectional view illustrating a metal component for electrochemical stack in a first embodiment.
FIG. 2 is a sectional view illustrating an electrochemical stack in the first embodiment.
FIG. 3 is a cross-sectional SEM image illustrating a corrosion evaluation result of a metal component in a comparative example.
FIG. 4 is a cross-sectional SEM image illustrating a corrosion evaluation result of a metal component in an example.
FIG. 5 is a sectional view illustrating a metal component for electrochemical stack in a second embodiment.
FIG. 6 is a diagram illustrating a first example of an electrochemical stack apparatus in the second embodiment.
FIG. 7 is a diagram illustrating a second example of the electrochemical stack apparatus in the second embodiment.

### DETAILED DESCRIPTION

A metal component for electrochemical stack in an embodiment includes: a metal base material having a first surface exposed to an atmosphere containing hydrogen and a second surface exposed to an atmosphere containing oxygen; and a hydrogen permeation inhibition and protection coating provided on the first surface of the metal base material, wherein the metal base material comprises chromium; and the hydrogen permeation inhibition and protection coating comprises at least one selected from the group consisting of aluminum-chromium composite oxide and silicon-chromium composite oxide, and at least part of chromium in the at least one selected from the group consisting of the aluminum-chromium composite oxide and the silicon-chromium composite oxide is formed by diffusion of chromium in the metal base material.

Hereinafter, a metal component for electrochemical stack and an electrochemical stack in embodiments will be explained with reference to the drawings.

In each embodiment illustrated below, the same codes are given to substantially the same components to partially omit their explanations in some cases. The drawings are schematically illustrated, in which the relation between a thickness and plane dimensions,and a ratio between thicknesses of parts may differ from actual ones.

### (First Embodiment)

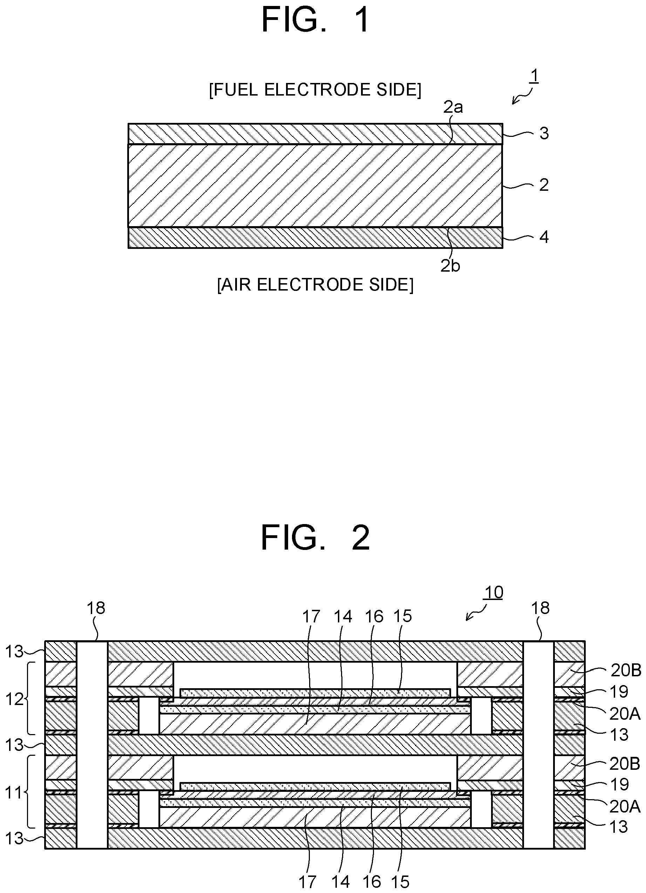

FIG. 1 illustrates a cross-section of a metal component for electrochemical stack according to a first embodiment. A metal component 1 illustrated in FIG. 1 includes a metal base material 2 having a first surface 2a and a second surface 2b. In the case of using the metal component 1, for example, as a separator of the electrochemical stack, the first surface 2a of the metal base material 2 is a surface arranged on a fuel electrode (hydrogen electrode) side and is exposed to an atmosphere containing hydrogen. The second surface 2b of the metal base material 2 is a surface arranged on an air electrode (oxygen electrode) side and is exposed to air. To the second surface 2b side, not limited to sending air, but sending nothing or sending oxygen, for example, in the SOEC. Therefore, the second surface 2b only needs to be a surface exposed to the atmosphere containing oxygen. On the first surface 2a of the metal base material 2, a hydrogen permeation inhibition and protection coating 3 is provided. On the second surface 2b of the metal base material 2, a chromium diffusion inhibition coating 4 is provided. The chromium diffusion inhibition coating 4 is provided according to the needs and does not need to be provided depending on the circumstances.

The metal component 1 illustrated in FIG. 1 is used, for example, for an electrochemical stack 10 illustrated in FIG. 2. The electrochemical stack 10 illustrated in FIG. 2 has a structure in which a first electrochemical cell 11 and a second electrochemical cell 12 are stacked via a separator 13. FIG. 2 illustrates the structure in which the first electrochemical cell 11 and the second electrochemical cell 12 are stacked, but the number of stacked layers of the electrochemical cells 11, 12 is not particularly limited, and the electrochemical stack 10 may have a structure in which three or more electrochemical cells are stacked. In the case where three or more electrochemical cells are stacked, a separator is arranged between every two adjacent cells so that the cells are electrically connected by the separator.

The first electrochemical cell 11 and the second electrochemical cell 12 have the same configuration, and each have a first electrode 14 functioning as a fuel electrode (hydrogen electrode), a second electrode 15 functioning as an air electrode (oxygen electrode), and an electrolyte layer 16 arranged between the electrodes 14 and 15. The first and second electrodes 14 and 15 are each formed of a porous electric conductor. The first electrode 14 is arranged on a porous support body 17. The electrolyte layer 16 is composed of, for example, a dense solid oxide electrolyte, and is an ion conductor which does not conduct electricity. Each of the first and second electrochemical cells 11 and 12 is composed of the first electrode 14, the second electrode 15, the electrolyte layer 16, and the support body 17. Around the first and second electrochemical cells 11 and 12, a gas flow path 18 is provided. More specifically, gas according to the use application of the electrochemical stack 10 is supplied when needed to the first and second electrodes 14 and 15 as a supply gas via a part of the gas flow path 18, and an exhaust gas generated in and exhausted from the first and second electrodes 14 and 15 is exhausted from the cells 11 and 12 via another part of the gas flow path 18.

In the case of using the electrochemical stack 10 as a fuel cell such as the SOFC, hydrogen (H₂) is supplied to the first electrode 14 as the fuel electrode (hydrogen electrode), and air (oxygen) is supplied to the second electrode 15 as the air electrode (oxygen electrode). Further, in the case of using the electrochemical stack 10 as an electrolysis cell such as the SOEC employing the high-temperature water vapor electrolysis method, water vapor (H₂O) or water vapor (H₂O) containing hydrogen (H₂) as needed is supplied to the first electrode 14 as the hydrogen electrode.

In the electrochemical cell 11, 12, the atmosphere of the first electrode 14 as the fuel electrode (hydrogen electrode) and the atmosphere of the second electrode 15 as the air electrode (oxygen electrode) are isolated from each other by the dense electrolyte layer 16. Also at the outer peripheral portions of the electrochemical cells 11 and 12 and between the adjacent cells 11 and 12, the atmospheres of the first electrode 14 and the second electrode 15 need to be separated by some dense member. In this embodiment, between the adjacent first electrode 14 and second electrode 15, their atmospheres are separated by the dense separator 13.

Further, a partition plate 19 which partitions atmospheres of the first electrode 14 and the second electrode 15 is provided on the outer peripheral part of the dense electrolyte layer 16 at the outer peripheral portion of one electrochemical cell 11, 12, thereby partitioning the atmospheres of the first electrode 14 and the second electrode 15. At a contact surface between the partition plate 19 and the separator 13, a contact surface between the partition plate 19 and the cell 11, 12, a joint surface in the case where the separator 13 is composed of a plurality of parts, a sealing member 20A is often used for prevention of gas leakage and, for example, a glass seal, or a compressive seal is used. In the electrochemical stack 10 illustrated in FIG. 2, a sealing member 20B having a desired thickness is arranged at the outer peripheral portion of the second electrode 15 in order to secure a space for sending air to the second electrode 15 side as the air electrode of the cell 11, 12.

The metal component 1 illustrated in FIG. 1 is used as the separator 13 in the electrochemical stack 10 illustrated in FIG. 2. In the metal component 1 used as the separator 13, the first surface 2a of the metal base material 2 is arranged on the first electrode 14 side as the fuel electrode, and the second surface 2b of the metal base material 2 is arranged on the second electrode 15 side as the air electrode. Therefore, the first surface 2a of the metal base material 2 is exposed to an atmosphere containing hydrogen such as hydrogen gas or a mixed gas of hydrogen and water vapor supplied to the first electrode 14 as the fuel electrode, or a similar atmosphere containing hydrogen exhausted from the first electrode 14. The second surface 2b of the metal base material 2 is exposed to an atmosphere containing oxygen such as air supplied to the second electrode 15 as the air electrode. The hydrogen permeation inhibition and protection coating 3 is provided on the first surface 2a of the metal base material 2.

The metal base material 2 comprises chromium. In the metal component 1 used as the separator 13 in the electrochemical stack 10 illustrated in FIG. 2, for example, ferritic stainless steel close in coefficient of thermal expansion to the cells 11 and 12, such as SUS 430 is used for the metal base material 2. In the case of using stainless steel for the metal base material 2, chromium contained in the metal base material 2 evaporates due to a high temperature of about 600 to 1000°C being a working temperature of the SOFC or the SOEC and adheres to the cells 11 and 12, and thereby may degrade the performance. Hence, the chromium diffusion inhibition coating 4 is provided on the second surface 2b of the metal base material 2. For the chromium diffusion inhibition coating 4, for example, a cobalt-based spinel oxide, or a perovskite oxide is used. The constituent materials of the metal base material 2 and the chromium diffusion inhibition coating 4 are not limited to the aforementioned materials but various materials used for the SOFC, or the SOEC are applicable.

In the case of using the electrochemical stack 10 illustrated in FIG. 2 as the SOFC or the SOEC, the electrochemical stack 10 is operated at a high temperature of about 600 to 1000°C in any case. Under such a high temperature and in a specific environment where one surface (second surface 2b) of the metal base material 2 is exposed to and in contact with the atmosphere containing oxygen such as air and the other surface (first surface 2a) is exposed to and in contact with the atmosphere containing hydrogen, metallic corrosion is accelerated. It has been revealed by the research of the inventors of this application that the presence of hydrogen, especially, hydrogen and water vapor on the rear side on the side in contact with air causes progress of corrosion tens of times that of simple exposure to air. The reasons for the corrosion acceleration include hydrogen present in the hydrogen atmosphere diffusing in the metal and reaching the oxygen-containing atmosphere side. The progress of the corrosion of the metal base material 2 by hydrogen diffusing in the metal will cause a decrease in mechanical strength of the metal component.

Further, in the separator 13 which is required to conduct electricity among the metal components, the electric resistance is directly linked to the efficiency of the SOFC, or the SOEC, and therefore an increase in resistance due to corrosion becomes a serious problem. Thus, to prevent the corrosion accelerated by the diffusion of hydrogen of the metal base material 2, it is important to suppress the diffusion of hydrogen in the metal base material 2. It has been revealed by the research of the inventors of this application that in the case of forming the chromium diffusion inhibition coating 4 on the second electrode 15 side as the air electrode of chromium from the separator 13 in order to prevent performance degradation due to the evaporation of chromium from the separator 13 composed of stainless steel and the adhesion of chromium to the cells 11 and 12, the deterioration of the chromium diffusion inhibition coating 4 is also accelerated due to the diffusion of hydrogen on its rear side.

The hydrogen permeation inhibition and protection coating 3 is provided on the first surface 2a exposed to the atmosphere containing hydrogen of the metal base material 2. The hydrogen permeation inhibition and protection coating 3 contains a material low in hydrogen permeability, specifically, at least one selected from a group consisting of aluminum-chromium composite oxide (AlCrO) and silicon-chromium composite oxide (SiCrO). Because at least one selected from the above material group is low in hydrogen permeability, the provision of the hydrogen permeation inhibition and protection coating 3 containing the material on the first surface 2a of the metal base material 2 suppresses the diffusion of hydrogen into the metal base material 2 from the atmosphere containing hydrogen present on the first surface 2a side of the metal base material 2. Therefore, it is possible to suppress the corrosion of the metal base material 2 on the second surface 2b side exposed to air due to the diffusion of hydrogen in the metal base material 2.

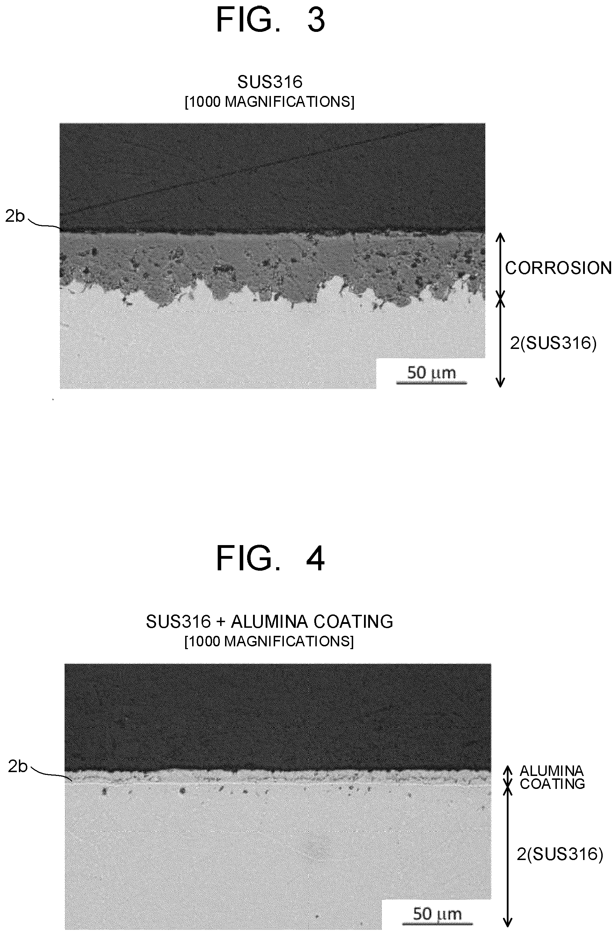

FIG. 3 and FIG. 4 illustrate results of evaluation of the degrees of corrosion in the case where the first surface 2a sides of a metal base material 2 provided with no hydrogen permeation inhibition and protection coating (metal base material A) and a metal base material 2 having an alumina coating provided on its surface (metal base material B) were exposed to a mixed atmosphere of 10% of hydrogen and 90% of water vapor and their second surface 2b sides were exposed to air. The evaluation test of corrosion was carried out by exposing the metal base material 2 (metal base material A, B) to the aforementioned atmosphere heated to 750°C and keeping the metal base material 2 in that state for 500 hours, then the state of the cross-section on the second surface 2b side of the metal base material 2 under the scanning electron microscope (SEM), and the corrosion state on the second surface 2b side was evaluated. FIG. 3 illustrates a cross-sectional SEM image on the second surface 2b side of the metal base material A provided with no hydrogen permeation inhibition and protection coating. FIG. 4 illustrates a cross-sectional SEM image on the second surface 2b side of the metal base material B provided with the alumina coating.

As illustrated in the cross-sectional SEM image in FIG. 3, it is found that the corrosion clearly occurs on the second surface 2b side in the metal base material A provided with no hydrogen permeation inhibition and protection coating. The occurrence of such corrosion causes a decrease in mechanical strength and also an increase in resistance of the metal base material A. In contrast to this, as illustrated in the cross-sectional SEM image in FIG. 4, the corrosion on the second surface 2b side is suppressed in the metal base material B provided with the alumina coating. Therefore, the provision of the hydrogen permeation inhibition and protection coating 3 can suppress the decrease in mechanical strength and the increase in resistance of the metal base material B. Further, the deterioration of the chromium diffusion inhibition coating 4 is also suppressed. Patent Literature (JP Patent No. 5258381) discloses that an oxidation prevention layer is provided on an anode surface of a metallic separator. However, the oxidation prevention layer is one of Ni, Pt, Ti, Au, and Ag and has no hydrogen permeation inhibition effect. Therefore, even if a coating composed of Ni or Pt is provided on the metal base material, the hydrogen diffusion inhibition effect cannot be obtained.

For the formation of the hydrogen permeation inhibition and protection coating 3, a thin film forming method such as a plating method, a vapor disposition method, or a sputtering method is applicable. A compound coating composed of oxide such as AlCrO can be formed by applying a thin film forming method such as the vapor disposition method, the sputtering method. In the case of applying the oxide to the hydrogen permeation inhibition and protection coating 3, a metal oxide film may be formed by forming a metal film on the metal base material 2 by the plating method and then firing it in an atmosphere containing oxygen. Further, as the metal base material 2 is composed of an alloy containing Cr , the hydrogen permeation inhibition and protection coating 3 containing AlCrO or SiCrO may be formed by forming a metal Al film or a metal Si film on the metal base material 2 by the plating method and then baking it to diffuse Cr of the metal base material 2 into the metal Al film or the metal Si film. A partial Cr in AlCrO or SiCrO is composed of Cr in the metal base material 2. The formation method of an oxide film is easy to execute and can be reduced in cost, and the oxide such as AlCrO or SiCrO is formed in situ, whereby the adhesiveness of the hydrogen permeation inhibition and protection coating 3 can be enhanced. In the case of applying a coating on the metal base material 2, peeling is a serious problem, and therefore the improvement in adhesiveness is important.

In the case of applying the above metal component 1 to the separator 13 of the electrochemical stack 10, the separator 13 is required to conduct electricity. There is no problem in the case of applying a good conductive material such as metal Al to the hydrogen permeation inhibition and protection coating 3, but in the case of applying a material low in conductivity such as oxide, the increase in electric resistance due to the formation of the hydrogen permeation inhibition and protection coating 3 needs to be suppressed. In this case, it is preferable to form the hydrogen permeation inhibition and protection coating 3 as thin as possible to suppress the increase in electric resistance due to the hydrogen permeation inhibition and protection coating 3. Specifically, the thickness of the hydrogen permeation inhibition and protection coating 3 is preferably set to 2 µm or more and 30 µm or less. When the thickness of the hydrogen permeation inhibition and protection coating 3 is less than 2 µm, the hydrogen diffusion inhibition effect may deteriorate. When the thickness of the hydrogen permeation inhibition and protection coating 3 is more than 30 µm, the electric resistance is likely to increase.

### (Second Embodiment)

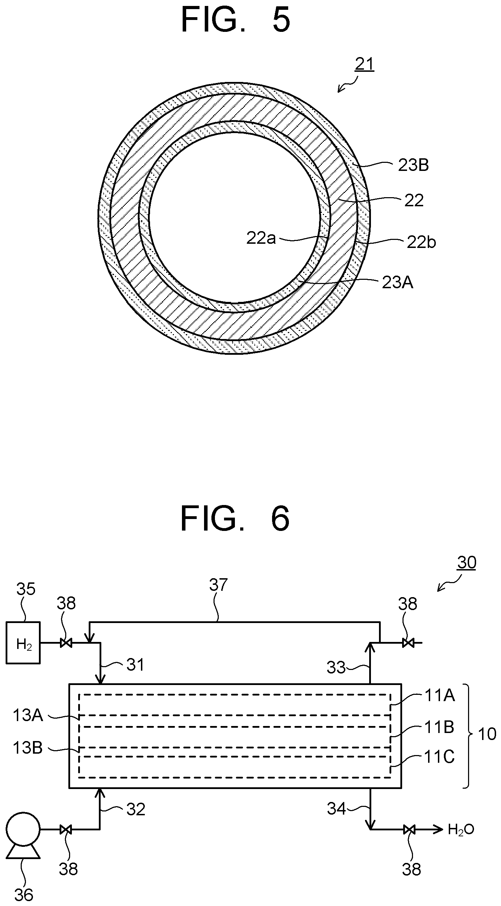

Next, a metal component for electrochemical stack according to a second embodiment will be explained with reference to FIG. 5, FIG. 6, and FIG. 7. FIG. 5 illustrates a cross-section in a radial direction of the metal component for electrochemical stack according to the second embodiment applied to a metal pipe. A metal pipe 21 illustrated in FIG. 5 includes a metal tube 22 having an inner surface (first surface) 22a and an outer surface (second surface) 22b. In the case of using the metal pipe 21, for example, for a pipe of supply gas or exhaust gas in the electrochemical stack, when the supply gas or exhaust gas containing hydrogen is circulated through the inside of the metal pipe 21, the inner surface 22a of the metal tube 22 is exposed to an atmosphere containing hydrogen and the outer surface 22b of the metal tube 22 is exposed to air. This corresponds to the condition that the corrosion of the metal is accelerated as explained in detail in the first embodiment. Hence, hydrogen permeation inhibition and protection coatings 23A and 23B are provided on the inner surface 22a and the outer surface 22b of the metal tube 22. The hydrogen permeation inhibition and protection coating 23A, 23B only needs to be formed at least one of the inner surface 22a and the outer surface 22b of the metal tube 22, and is preferably formed at least on the inner surface 22a of the metal tube 22 directly exposed to the atmosphere containing hydrogen.

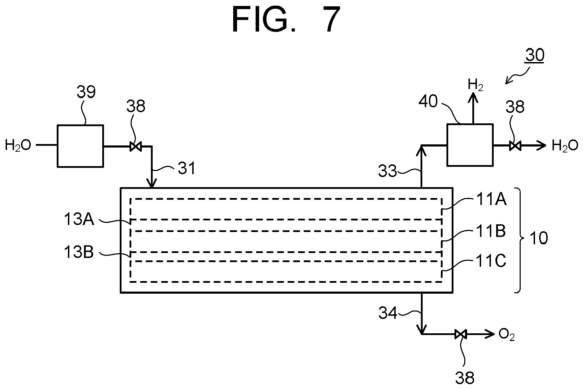

The metal pipe 21 illustrated in FIG. 5 is used for electrochemical stack apparatuses 30 illustrated in FIG. 6 and FIG. 7. The electrochemical stack apparatuses 30 illustrated in FIG. 6 and FIG. 7 each include an electrochemical stack 10 having a structure in which a plurality of electrochemical cells 11A, 11B, 11C are stacked via separators 13A, 13B arranged respectively between adjacent cells as in the first embodiment. The electrochemical stack apparatus 30 includes a first supply pipe 31 and a second supply pipe 32 which supply a source gas to the electrochemical stack 10, and a first exhaust pipe 33 and a second exhaust pipe 34 which exhaust gas generated in the electrochemical stack 10 and excessive gas.

In the case of applying the electrochemical stack 10 to the SOFC, hydrogen (H₂) is supplied from a hydrogen tank 35 through the first supply pipe 31 to the first electrode as the fuel electrode (hydrogen electrode) of the cell 11, and air and oxygen (O₂) in air are supplied from a compressor 36 through a second supply pipe 32 to the second electrode as the air electrode (oxygen electrode) as illustrated in FIG. 6. At the first electrode, the reaction of following Formula (1) occurs.

H₂ + O²⁻ → H₂O + 2e⁻ ... (1)

The oxide ion (O²⁻) generated in this event is sent to the second electrode through an electrolyte layer of the cell 11. The electron (e⁻) reaches the second electrode through an external circuit. At the first electrode, water (H₂O) is generated.

1/2O₂ + 2e⁻ → O²⁻ ... (2)

The excessive hydrogen exhausted from the first exhaust pipe 33 is returned to the first supply pipe 31 via a recovery pipe 37. The supply pipes 31, 32 and the exhaust pipes 33, 34 are provided with valves 38 as needed. In the electrochemical stack apparatus 30 including the SOFC, the metal pipe 21 in the second embodiment is used at least for the first supply pipe 31.

In the case of applying the electrochemical stack 10 to the SOEC, water vapor (H₂O) containing about 10 vol% of hydrogen is supplied from a heated water vapor generator 39 through the first supply pipe 31 to the first electrode as the hydrogen electrode of the cell 11 as illustrated in FIG. 7. When applying voltage between the first electrode and the second electrode, the following reaction of Formula (3) occurs at the first electrode.

H₂O + 2e⁻ → H₂ + O²⁻ ... (3)

The oxide ion (O²⁻) generated in this event is sent to the second electrode through the electrolyte layer of the cell 11. At the second electrode, oxygen (O₂) is generated by the following reaction of Formula (4).

O²⁻ → 1/2O₂ + 2e⁻ ... (4)

The hydrogen (H₂) generated at the first electrode and excessive water vapor (H₂O) are sent through the first exhaust pipe 33 to a separator 40 having a function of cooling and separating hydrogen and water vapor. In the electrochemical stack apparatus 30 having the SOEC, the metal pipe 21 in the second embodiment is used for the first supply pipe 31 and the first exhaust pipe 33. In the case of not adding hydrogen to water vapor to be supplied to the first electrode, the metal pipe 21 may be applied only to the first exhaust pipe 33.

In the metal pipe 21 used as at least part of the supply pipes 31, 32 and the exhaust pipes 33, 34 of each of the electrochemical stack apparatuses 30 illustrated in FIG. 6 and FIG. 7, for example, a general-purpose high heat-resistant stainless steel such as SUS316 or SUS304 is used for the metal tube 22. The constituent material of the metal tube 22 is not limited to the above high heat-resistant stainless steel, but various heat-resistant materials used for the SOFC, and the SOEC are applicable.

In the case of using the electrochemical stack 10 illustrated in FIG. 2 as the SOFC or the SOEC, the electrochemical stack 10 is operated at a high temperature of about 600 to 1000°C in any case. Further, the water vapor supplied to the electrochemical stack 10 is also heated to a high temperature of about 600 to 1000°C. Under such a high temperature, in a specific environment where the inner surface (first surface) 22a of the metal tube 22 is exposed to and in contact with the atmosphere containing hydrogen and the outer surface (second surface) 22b is exposed to and in contact with air, the metallic corrosion of the metal tube 22 is accelerated. To prevent the corrosion of the metal tube 22 accelerated by the diffusion of hydrogen, it is important to suppress the diffusion of hydrogen in the metal tube 22.

Hence, at least one of the inner surface 22a and the outer surface 22b of the metal tube 22 is provided with a hydrogen permeation inhibition and protection coating 23. For the hydrogen permeation inhibition and protection coating 23, a material low in hydrogen permeability, specifically, at least one selected from a group consisting of aluminum-chromium composite oxide (AlCrO) and silicon-chromium composite oxide (SiCrO) is used as in the first embodiment. Because at least one material selected from the above material group is low in hydrogen permeability, the provision of the hydrogen permeation inhibition and protection coating 23 containing the material at least on the inner surface 22a of the inner surface 22a and the outer surface 22b of the metal tube 22 suppresses the diffusion of hydrogen into the metal tube 22 from the atmosphere containing hydrogen present on the inner surface 22a side of the metal tube 22. Therefore, it is possible to suppress the corrosion of the metal tube 22 on the outer surface 22b side exposed to air due to the diffusion of hydrogen in the metal tube 22.

In the metal tube 22 provided with the hydrogen permeation inhibition and protection coating 23 on the inner surface 22a, the decrease in mechanical strength of the metal tube 22 can be suppressed because the hydrogen permeation inhibition and protection coating 23 provided on the inner surface 22a side in contact with an atmosphere containing hydrogen and water vapor suppresses the permeation and diffusion of hydrogen and the occurrence of the corrosion on the outer surface 22b side in contact with air due to the diffusion of hydrogen, as in the results illustrated in FIG. 3 and FIG. 4, as compared with the metal tube 22 not provided with the hydrogen permeation inhibition and protection coating 23 on the inner surface 22a. Accordingly, the deterioration in the reliability and durability of the electrochemical stack apparatus 30 due to the decrease in mechanical strength of the metal pipe 21 can be suppressed.

For the formation of the hydrogen permeation inhibition and protection coating 23, a thin film forming method such as a plating method, a vapor disposition method, or a sputtering method is applicable, for example, for a metal coating such as Al, and a thin film forming method such as a vapor disposition method, or a sputtering method is applicable for a compound coating composed of oxide such as AlCrO as in the first embodiment. When applying the oxide to the hydrogen permeation inhibition and protection coating 23, a metal film may be first formed by a plating method on the surface (22a, 22b) of the metal tube 22, and then burned in an atmosphere containing oxygen to form a metal oxide film.

Further, in the formation of the hydrogen permeation inhibition and protection coating 23 composed of a composite oxide containing Cr such as AlCrO or SiCrO in the case where the metal tube 22 is composed of an alloy containing Cr, the hydrogen permeation inhibition and protection coating 23 containing AlCr or SiCrO may be formed by forming a metal Al film or a metal Si film on the surface (22a, 22b) of the metal tube 22 by the plating method, then baking it in an atmosphere containing oxygen to diffuse Cr in the metal tube 22 into the metal Al film or metal Si film while oxidizing the metal Al film or the metal Si film. In this case, a material containing Cr does not need to be used in forming a film of the hydrogen permeation inhibition and protection coating 23. The forming method of the oxide film is easy to execute and can be reduced in cost, and the oxide such as AlCrO or SiCrO is formed in situ, whereby the adhesiveness of the hydrogen permeation inhibition and protection coating 23 can be enhanced. In the case of applying a coating on the metal tube 22, peeling is a serious problem, and therefore the improvement in adhesiveness is important.

In the case of applying the above metal pipe 21 to the electrochemical stack apparatus 30, it is not required to conduct electricity through the metal pipe 21, so that the increase in electric resistance due to the formation of the hydrogen permeation inhibition and protection coating 23 does not need to be suppressed unlike the metal component 1 used for the separator in the first embodiment. Therefore, the hydrogen permeation inhibition and protection coating 23 provided on the metal tube 22 may be formed thicker than the hydrogen permeation inhibition and protection coating 3 provided on the metal base material 2. This can enhance the durability and reliability of the hydrogen permeation inhibition and protection coating 23. However, if the thickness of the hydrogen permeation inhibition and protection coating 23 is too large, peeling becomes likely to occur, and therefore the thickness of the hydrogen permeation inhibition and protection coating 23 is preferably set to 100 µm or less. The thickness of the hydrogen permeation inhibition and protection coating 23 is preferably set to 2 µm or more, and more preferably set to 5 µm or more for enhancing the hydrogen diffusion inhibition effect.

The above first and second embodiments illustrate examples in which the electrochemical cell and the electrochemical stack are applied to the fuel cell or the electrolysis cell, but the electrochemical cell and the electrochemical stack are not limited to the above but may be, for example, an electrolysis device for carbon dioxide (CO₂) or a co-electrolysis device for a mixed gas of carbon dioxide and water vapor. For example, in the CO₂ electrolysis device, the first electrode reduces supplied carbon dioxide (CO₂) to generate carbon monoxide (CO) and an oxide ion (O²⁻). The second electrode generates oxygen from the oxide ion (O²⁻) sent from the first electrode. The metal component or metal pipe in the embodiment may be applied to the CO₂ electrolysis device. The reaction of the first electrode is as following Formula (5) and Formula (6), and only the reaction of Formula (6) occurs in the case of CO₂ electrolysis, and the reactions of Formula (5) and Formula (6) occur in the case of co-electrolysis. The reaction of the second electrode is as following Formula (7).

H₂O + 2e⁻ → H₂ + O²⁻ ... (5)

CO₂ + 2e⁻ → CO + O²⁻ ... (6)

2O²⁻ → O₂ + 4e⁻ ... (7)

## Claims

1. A metal component for electrochemical stack comprising:
a metal base material having a first surface exposed to an atmosphere containing hydrogen and a second surface exposed to an atmosphere containing oxygen; and
a hydrogen permeation inhibition and protection coating provided on the first surface of the metal base material, wherein
the metal base material comprises chromium; and
the hydrogen permeation inhibition and protection coating comprises at least one selected from the group consisting of aluminum-chromium composite oxide and silicon-chromium composite oxide, and at least part of chromium in the at least one selected from the group consisting of the aluminum-chromium composite oxide and the silicon-chromium composite oxide is formed by diffusion of chromium in the metal base material.

2. The metal component for electrochemical stack according to claim 1, wherein
the metal component is configured to use as a conduction member, and the hydrogen permeation inhibition and protection coating has a thickness of 2 µm or more and 30 µm or less.

3. An electrochemical stack comprising:
a first electrochemical cell comprising a first electrode in contact with an atmosphere containing hydrogen, a second electrode in contact with an atmosphere containing oxygen, and an electrolyte layer interposed between the first electrode and the second electrode;
a second electrochemical cell comprising a first electrode in contact with an atmosphere containing hydrogen, a second electrode in contact with an atmosphere containing oxygen, and an electrolyte layer interposed between the first electrode and the second electrode; and
a separator arranged between the first electrode of the first electrochemical cell and the second electrode of the second electrochemical cell to electrically connect the first electrode of the first electrochemical cell and the second electrode of the second electrochemical cell, wherein
the separator comprises a metal component comprising: a metal base material having a first surface arranged on the first electrode side of the first electrochemical cell and exposed to an atmosphere containing hydrogen and a second surface arranged on the second electrode side of the second electrochemical cell and exposed to an atmosphere containing oxygen; and a hydrogen permeation inhibition and protection coating provided on the first surface of the metal base material, wherein
the metal base material comprises chromium; and
the hydrogen permeation inhibition and protection coating comprises at least one selected from the group consisting of aluminum-chromium composite oxide and silicon-chromium composite oxide, and at least part of chromium in the at least one selected from the group consisting of the aluminum-chromium composite oxide and the silicon-chromium composite oxide is formed by diffusion of chromium in the metal base material.

4. The electrochemical stack according to claim 3, wherein
the hydrogen permeation inhibition and protection coating has a thickness of 2 µm or more and 30 µm or less.

5. The electrochemical stack according to claim 3, wherein
the electrolyte layer of the first electrochemical cell and the electrolyte layer of the second electrochemical cell comprise a solid oxide electrolyte.

6. The electrochemical stack according to claim 3, wherein
the first electrode of the first electrochemical cell and the first electrode of the second electrochemical cell are electrodes each for generating a hydrogen ion from supplied hydrogen, and the second electrode of the first electrochemical cell and the second electrode of the second electrochemical cell are electrodes each for generating water from supplied oxygen and the hydrogen ion sent from the first electrode.

7. The electrochemical stack according to claim 3, wherein
the first electrode of the first electrochemical cell and the first electrode of the second electrochemical cell are electrodes each for generating hydrogen and an oxide ion from supplied water, and the second electrode of the first electrochemical cell and the second electrode of the second electrochemical cell are electrodes each for generating oxygen from the oxide ion sent from the first electrode.

8. An electrochemical stack comprising:
a first electrochemical cell comprising a first electrode in contact with an atmosphere containing hydrogen, a second electrode in contact with an atmosphere containing oxygen, and an electrolyte layer interposed between the first electrode and the second electrode;
a second electrochemical cell comprising a first electrode in contact with an atmosphere containing hydrogen, a second electrode in contact with an atmosphere containing oxygen, and an electrolyte layer interposed between the first electrode and the second electrode;
a separator arranged between the first electrode of the first electrochemical cell and the second electrode of the second electrochemical cell to electrically connect the first electrode of the first electrochemical cell and the second electrode of the second electrochemical cell; and
a pipe having at least one of a supply pipe configured to supply gas containing hydrogen to the first electrode, and an exhaust pipe configured to exhaust gas containing hydrogen from the first electrode, wherein
the pipe comprises a metal pipe comprising: a metal tube having an inner surface in contact with the supply gas or the exhaust gas, and an outer surface in contact with an atmosphere containing oxygen; and a hydrogen permeation inhibition and protection coating provided at least on the inner surface of the metal tube, wherein
the metal tube comprises chromium; and
the hydrogen permeation inhibition and protection coating comprises at least one selected from a group consisting of aluminum-chromium composite oxide and silicon-chromium composite oxide, and at least part of chromium in the at least one selected from the group consisting of the aluminum-chromium composite oxide and the silicon-chromium composite oxide is formed by diffusion of chromium in the metal tube.

9. The electrochemical stack according to claim 8, wherein
the electrolyte layer of the first electrochemical cell and the electrolyte layer of the second electrochemical cell comprise a solid oxide electrolyte.

## Patentansprüche

1. Metallkomponente für einen elektrochemischen Stapel, umfassend:
ein Metallbasismaterial mit einer ersten Oberfläche, die einer wasserstoffhaltigen Atmosphäre ausgesetzt ist, und einer zweiten Oberfläche, die einer sauerstoffhaltigen Atmosphäre ausgesetzt ist; und
eine Wasserstoffpermeationsinhibitions- und Schutzbeschichtung, angeordnet auf der ersten Oberfläche des Metallbasismaterials, wobei
das Metallbasismaterial Chrom umfasst; und
die Wasserstoffpermeationsinhibitions- und Schutzbeschichtung mindestens eines, ausgewählt aus der Gruppe, bestehend aus Aluminium-Chrom-Kompositoxid und Silicium-Chrom-Kompositoxid, umfasst und mindestens ein Teil des Chroms in dem mindestens einen, ausgewählt aus der Gruppe, bestehend aus Aluminium-Chrom-Kompositoxid und Silicium-Chrom-Kompositoxid, durch Diffusion von Chrom in das Metallbasismaterial gebildet ist.

2. Metallkomponente für einen elektrochemischen Stapel gemäß Anspruch 1, wobei
die Metallkomponente zur Verwendung als ein Leitungselement konfiguriert ist und die Wasserstoffpermeationsinhibitions- und Schutzbeschichtung eine Dicke von 2 µm oder mehr und 30 µm oder weniger aufweist.

3. Elektrochemischer Stapel, umfassend:
eine erste elektrochemische Zelle, umfassend eine erste Elektrode, die in Kontakt mit einer wasserstoffhaltigen Atmosphäre steht, eine zweite Elektrode, die in Kontakt mit einer sauerstoffhaltigen Atmosphäre steht, und eine Elektrolytschicht, die zwischen der ersten und der zweiten Elektrode angeordnet ist;
eine zweite elektrochemische Zelle, umfassend eine erste Elektrode, die in Kontakt mit einer wasserstoffhaltigen Atmosphäre steht, eine zweite Elektrode, die in Kontakt mit einer sauerstoffhaltigen Atmosphäre steht, und eine Elektrolytschicht, die zwischen der ersten Elektrode und der zweiten Elektrode angeordnet ist; und
einen Separator, der zwischen der ersten Elektrode der ersten elektrochemischen Zelle und der zweiten Elektrode der zweiten elektrochemischen Zelle angeordnet ist, um die erste Elektrode der ersten elektrochemischen Zelle und die zweite Elektrode der zweiten elektrochemischen Zelle elektrisch zu verbinden, wobei
der Separator eine Metallkomponente umfasst, umfassend:
ein Metallbasismaterial mit einer ersten Oberfläche, die auf der Seite der ersten Elektrode der ersten elektrochemischen Zelle angeordnet und einer wasserstoffhaltigen Atmosphäre ausgesetzt ist, und einer zweiten Oberfläche, die auf der Seite der zweiten Elektrode der zweiten elektrochemischen Zelle angeordnet und einer sauerstoffhaltigen Atmosphäre ausgesetzt ist;
und eine Wasserstoffpermeationsinhibitions- und Schutzbeschichtung, die auf der ersten Oberfläche des Metallbasismaterials angeordnet ist, wobei
das Metallbasismaterial Chrom umfasst; und
die Wasserstoffpermeationsinhibitions- und Schutzbeschichtung mindestens eines, ausgewählt aus der Gruppe, bestehend aus Aluminium-Chrom-Kompositoxid und Silicium-Chrom-Kompositoxid, umfasst und mindestens ein Teil des Chroms in dem mindestens einen, ausgewählt aus der Gruppe, bestehend aus Aluminium-Chrom-Kompositoxid und Silicium-Chrom-Kompositoxid, durch Diffusion von Chrom in das Metallbasismaterial gebildet ist.

4. Elektrochemischer Stapel gemäß Anspruch 3, wobei
die Wasserstoffpermeationsinhibitions- und Schutzbeschichtung eine Dicke von 2 µm oder mehr und 30 µm oder weniger aufweist.

5. Elektrochemischer Stapel gemäß Anspruch 3, wobei
die Elektrolytschicht der ersten elektrochemischen Zelle und die Elektrolytschicht der zweiten elektrochemischen Zelle einen Festoxidelektrolyten umfassen.

6. Elektrochemischer Stapel gemäß Anspruch 3, wobei
die erste Elektrode der ersten elektrochemischen Zelle und die erste Elektrode der zweiten elektrochemischen Zelle jeweils Elektroden zum Erzeugen eines Wasserstoffions aus zugeführtem Wasserstoff sind, und die zweite Elektrode der ersten elektrochemischen Zelle und die zweite Elektrode der zweiten elektrochemischen Zelle jeweils Elektroden zum Erzeugen von Wasser aus zugeführtem Sauerstoff und dem von der ersten Elektrode gesendeten Wasserstoffion sind.

7. Elektrochemischer Stapel gemäß Anspruch 3, wobei
die erste Elektrode der ersten elektrochemischen Zelle und die erste Elektrode der zweiten elektrochemischen Zelle jeweils Elektroden zur Erzeugung von Wasserstoff und einem Oxidion aus zugeführtem Wasser sind und die zweite Elektrode der ersten elektrochemischen Zelle und die zweite Elektrode der zweiten elektrochemischen Zelle jeweils Elektroden zur Erzeugung von Sauerstoff aus dem von der ersten Elektrode gesendeten Oxidion sind.

8. Elektrochemischer Stapel, umfassend:
eine erste elektrochemische Zelle, umfassend eine erste Elektrode, die in Kontakt mit einer wasserstoffhaltigen Atmosphäre steht, eine zweite Elektrode, die in Kontakt mit einer sauerstoffhaltigen Atmosphäre steht, und eine Elektrolytschicht, die zwischen der ersten und der zweiten Elektrode angeordnet ist;
eine zweite elektrochemische Zelle, umfassend eine erste Elektrode, die in Kontakt mit einer wasserstoffhaltigen Atmosphäre steht, eine zweite Elektrode, die in Kontakt mit einer sauerstoffhaltigen Atmosphäre steht, und eine Elektrolytschicht, die zwischen der ersten Elektrode und der zweiten Elektrode angeordnet ist;
einen Separator, der zwischen der ersten Elektrode der ersten elektrochemischen Zelle und der zweiten Elektrode der zweiten elektrochemischen Zelle angeordnet ist, um die erste Elektrode der ersten elektrochemischen Zelle und die zweite Elektrode der zweiten elektrochemischen Zelle elektrisch zu verbinden; und
ein Rohr mit mindestens einem von einem Zufuhrrohr, das zum Zuführen eines wasserstoffhaltigen Gases zu der ersten Elektrode konfiguriert ist, und einem Abgasrohr, das zum Ableiten eines wasserstoffhaltigen Gases von der ersten Elektrode konfiguriert ist, wobei
das Rohr ein Metallrohr umfasst, umfassend: eine Metallröhre mit einer Innenfläche, die in Kontakt mit dem Zufuhrgas oder dem Abgas steht, und einer Außenfläche, die in Kontakt mit einer sauerstoffhaltigen Atmosphäre steht; und eine Wasserstoffpermeationsinhibitions- und Schutzbeschichtung, die zumindest auf der Innenfläche der Metallröhre angeordnet ist, wobei
die Metallröhre Chrom umfasst; und
die Wasserstoffpermeationsinhibitions- und Schutzbeschichtung mindestens eines, ausgewählt aus der Gruppe, bestehend aus Aluminium-Chrom-Kompositoxid und Silicium-Chrom-Kompositoxid, umfasst und mindestens ein Teil des Chroms in dem mindestens einen, ausgewählt aus der Gruppe, bestehend aus Aluminium-Chrom-Kompositoxid und Silicium-Chrom-Kompositoxid, durch Diffusion von Chrom in die Metallröhre gebildet ist.

9. Elektrochemischer Stapel gemäß Anspruch 8, wobei
die Elektrolytschicht der ersten elektrochemischen Zelle und die Elektrolytschicht der zweiten elektrochemischen Zelle einen Festoxidelektrolyten umfassen.

## Revendications

1. Composant métallique pour pile électrochimique comprenant :
un matériau de base métallique présentant une première surface exposée à une atmosphère contenant de l'hydrogène et une seconde surface exposée à une atmosphère contenant de l'oxygène ; et
un revêtement d'inhibition et de protection de perméation d'hydrogène disposé sur la première surface du matériau de base métallique, dans lequel
le matériau de base métallique comprend du chrome ; et
le revêtement d'inhibition et de protection de perméation d'hydrogène comprend au moins un élément choisi dans le groupe constitué par un oxyde composite aluminium-chrome et un oxyde composite silicium-chrome, et au moins une partie du chrome dans l'au moins un élément choisi dans le groupe constitué par l'oxyde composite aluminium-chrome et l'oxyde composite silicium-chrome est formée par diffusion de chrome dans le matériau de base métallique.

2. Composant métallique pour pile électrochimique selon la revendication 1, dans lequel
le composant métallique est configuré pour être utilisé en tant qu'élément de conduction, et le revêtement d'inhibition et de protection de perméation d'hydrogène présente une épaisseur de 2 µm ou plus et de 30 µm ou moins.

3. Pile électrochimique comprenant :
une première cellule électrochimique comprenant une première électrode en contact avec une atmosphère contenant de l'hydrogène, une seconde électrode en contact avec une atmosphère contenant de l'oxygène, et une couche d'électrolyte interposée entre la première électrode et la seconde électrode ;
une seconde cellule électrochimique comprenant une première électrode en contact avec une atmosphère contenant de l'hydrogène, une seconde électrode en contact avec une atmosphère contenant de l'oxygène, et une couche d'électrolyte interposée entre la première électrode et la seconde électrode ; et
un séparateur agencé entre la première électrode de la première cellule électrochimique et la seconde électrode de la seconde cellule électrochimique pour connecter électriquement la première électrode de la première cellule électrochimique et la seconde électrode de la seconde cellule électrochimique, dans laquelle
le séparateur comprend un composant métallique comprenant :
un matériau de base métallique présentant une première surface agencée sur le côté première électrode de la première cellule électrochimique et exposée à une atmosphère contenant de l'hydrogène et une seconde surface disposée sur le côté seconde électrode de la seconde cellule électrochimique et exposée à une atmosphère contenant de l'oxygène ; et
un revêtement d'inhibition et de protection de perméation d'hydrogène disposé sur la première surface du matériau de base métallique, dans laquelle
le matériau de base métallique comprend du chrome ; et
le revêtement d'inhibition et de protection de perméation d'hydrogène comprend au moins un élément choisi dans le groupe constitué par un oxyde composite aluminium-chrome et un oxyde composite silicium-chrome, et au moins une partie du chrome dans l'au moins un élément choisi dans le groupe constitué par l'oxyde composite aluminium-chrome et l'oxyde composite silicium-chrome est formée par diffusion de chrome dans le matériau de base métallique.

4. Pile électrochimique selon la revendication 3, dans laquelle
le revêtement de protection et d'inhibition de perméation d'hydrogène présente une épaisseur de 2 µm ou plus et de 30 µm ou moins.

5. Pile électrochimique selon la revendication 3, dans laquelle
la couche d'électrolyte de la première cellule électrochimique et la couche d'électrolyte de la seconde cellule électrochimique comprennent un électrolyte d'oxyde solide.

6. Pile électrochimique selon la revendication 3, dans laquelle
la première électrode de la première cellule électrochimique et la première électrode de la seconde cellule électrochimique sont des électrodes pour générer chacune un ion hydrogène à partir de l'hydrogène fourni, et la seconde électrode de la première cellule électrochimique et la seconde électrode de la seconde cellule électrochimique sont des électrodes pour générer chacune de l'eau à partir de l'oxygène fourni et de l'ion hydrogène envoyé en provenance de la première électrode.

7. Pile électrochimique selon la revendication 3, dans laquelle
la première électrode de la première cellule électrochimique et la première électrode de la seconde cellule électrochimique sont des électrodes pour générer chacune de l'hydrogène et un ion oxyde à partir de l'eau fournie, et la seconde électrode de la première cellule électrochimique et la seconde électrode de la seconde cellule électrochimique sont des électrodes pour générer chacune de l'oxygène à partir de l'ion oxyde envoyé en provenance de la première électrode.

8. Pile électrochimique comprenant :
une première cellule électrochimique comprenant une première électrode en contact avec une atmosphère contenant de l'hydrogène, une seconde électrode en contact avec une atmosphère contenant de l'oxygène, et une couche d'électrolyte interposée entre la première électrode et la seconde électrode ;
une seconde cellule électrochimique comprenant une première électrode en contact avec une atmosphère contenant de l'hydrogène, une seconde électrode en contact avec une atmosphère contenant de l'oxygène, et une couche d'électrolyte interposée entre la première électrode et la seconde électrode ;
un séparateur agencé entre la première électrode de la première cellule électrochimique et la seconde électrode de la seconde cellule électrochimique pour connecter électriquement la première électrode de la première cellule électrochimique et la seconde électrode de la seconde cellule électrochimique ; et
un tuyau présentant au moins un parmi un tuyau d'alimentation configuré pour fournir un gaz contenant de l'hydrogène à la première électrode, et un tuyau d'échappement configuré pour évacuer un gaz contenant de l'hydrogène de la première électrode, dans laquelle
le tuyau comprend un tuyau métallique comprenant : un tube métallique présentant une surface interne en contact avec le gaz d'alimentation ou le gaz d'échappement, et une surface externe en contact avec une atmosphère contenant de l'oxygène ; et un revêtement d'inhibition et de protection de perméation d'hydrogène disposé au moins sur la surface interne du tube métallique, dans laquelle
le tube métallique comprend du chrome ; et
le revêtement d'inhibition et de protection de perméation d'hydrogène comprend au moins un élément choisi dans un groupe constitué par un oxyde composite aluminium-chrome et un oxyde composite silicium-chrome, et au moins une partie du chrome dans l'au moins un élément choisi dans le groupe constitué par l'oxyde composite aluminium-chrome et l'oxyde composite silicium-chrome est formée par diffusion de chrome dans le tube métallique.

9. Pile électrochimique selon la revendication 8, dans laquelle
la couche d'électrolyte de la première cellule électrochimique et la couche d'électrolyte de la seconde cellule électrochimique comprennent un électrolyte d'oxyde solide.
